# EUROPÄISCHE PATENTSCHRIFT

(11) **EP 2 160 852 B1**
(45) Veröffentlichungstag und Bekanntmachung des Hinweises auf die Patenterteilung: **09.04.2014**
(21) Anmeldenummer: 07819063.4
(22) Anmeldetag: 17.10.2007
(51) Int. Cl.: H04B 10/114, G08C 23/04

(54) **VERFAHREN ZUR ÜBERTRAGUNG VON DATEN UND DATENÜBERTRAGUNGSVORRICHTUNG ZUR FERNSTEUERUNG UND/ODER FERNABFRAGE**
METHOD FOR TRANSMITTING DATA AND DATA TRANSMISSION DEVICE FOR REMOTE CONTROL AND/OR REMOTE INQUIRY
PROCÉDÉ DE TRANSMISSION DE DONNÉES ET DISPOSITIF DE TRANSMISSION DE DONNÉES POUR COMMANDE À DISTANCE ET/OU INTERROGATION À DISTANCE

(30) Priorität: 17.10.2006 DE 102006049457; 06.03.2007 DE 102007011204
(43) Veröffentlichungstag der Anmeldung: 10.03.2010
(73) Patentinhaber: WILO SE, 44263 Dortmund (DE)
(72) Erfinder: MERKEL, Sergej, 44269 Dortmund (DE); KÖTTER, Ullrich, 44287 Dortmund (DE)
(74) Vertreter: Schneiders, Josef
(86) Internationale Anmeldenummer: PCT/EP2007/008995
(87) Internationale Veröffentlichungsnummer: WO 2008/046600

(56) Entgegenhaltungen:
- EP-A- 1 445 780
- US-A- 5 093 744
- US-A- 5 631 503
- US-A- 6 114 830

## Beschreibung

Die Erfindung betrifft ein Verfahren zur Übertragung von Daten mittels einer Sendevorrichtung, zum Zwecke der Fernsteuerung und/oder Fernabfrage eines elektrischen Gerätes, insbesondere einer Pumpe.

Außerdem betrifft die Erfindung eine Datenübertragungsvorrichtung zur Fernsteuerung und/oder Fernabfrage eines elektrischen Gerätes, insbesondere einer Pumpe, mit einer Sendevorrichtung.

Schließlich betrifft die Erfindung die Verwendung einer Datenübertragungsvorrichtung zur Fernsteuerung und/oder Fernabfrage einer Pumpe.

Datenübertragungsvorrichtungen, die zur Fernsteuerung und/oder Fernabfrage von elektrischen Geräten dienen, sowie Verfahren zum Betrieb derartiger Vorrichtungen sind im Stand der Technik allgemein bekannt. Beispielsweise ist es bekannt, jegliche Art von Geräten durch die Aussendung von Infrarotsignalen fernzubedienen. Durch eine Infrarot-Fernbedienung werden in Infrarot-Lichtimpulsen kodierte Befehle ausgesendet und von dem zu bedienenden Gerät empfangen. Bei Infrarot-Fernbedienungen werden die Lichtimpulse im Wesentlichen in der Weise erzeugt, dass die auszusendenden Daten, wie beispielsweise die Befehle zur Steuerung des Gerätes, ggf. mit weiteren Informationen, die im Rahmen eines Datenübertragungsprotokolls verwendet werden, in eine Abfolge von elektrischen Pulsen und Pulspausen gewandelt werden und mit diesen Pulsen und Pulspausen ein Schaltmittel angesteuert wird. Das Schaltmittel schaltet in Abhängigkeit von den Pulsen und Pulspausen einen Stromfluss durch eine Infrarot-Sendevorrichtung. Bei einer solchen Infrarot-Sendevorrichtung kann es sich z. B. um eine Infrarot-Sendediode oder um eine Anordnung von mehreren Infrarot-Sendedioden handeln. Entsprechend den an dem Schaltmittel anliegenden Pulsen und Pulspausen, die die zu sendenden Daten repräsentieren, erfolgt ein Stromfluss durch die Infrarot-Sendediode, so dass die Infrarot-Sendediode entsprechende Lichtimpulse aussendet. Die elektrischen Pulse und Pulspausen können z. B. durch übliche TTL-Pegel gegeben sein, welche die Zustände "0" und "1" repräsentieren, so dass die Abfolge elektrischer Pulse eine Abfolge von Informationsbits darstellen kann.

Die erzeugten Lichtimpulse werden mittels einer geeigneten Empfangsvorrichtung empfangen. Die Empfangsvorrichtung wandelt die empfangenen Lichtimpulse wiederum in elektrische Pulse um. Die so erhaltenen Signale werden dann von dem fernzubedienenden Gerät ausgewertet.

Im Stand der Technik ist es des Weiteren bekannt, anstelle spezieller Fernbedienungen, die zur Fernbedienung eines bestimmten Gerätes hergestellt sind, universelle Fernbedienungen zu verwenden. Ebenso bekannt ist die Verwendung von tragbaren Computern, wie z. B. so genannten PDAs (Personal Digital Assistant) als Fernbedienungen. Derartige tragbare Computer können mittels geeigneter Software zur Fernbedienung von beliebigen Geräten eingerichtet sein. Zur Kommunikation mit den fernzubedienenden Geräten dient dann üblicherweise die in tragbare Computer häufig integrierte IrDA-Schnittstelle.

Nachteiligerweise haben übliche Fernbedienungen eine geringe Reichweite. Dies führt dazu, dass die maximal mögliche Entfernung zwischen der Fernbedienung und dem fernzubedienenden Gerät begrenzt ist. Das Problem besteht insbesondere bei den in tragbare Computer integrierten IrDA-Schnittstellen. Die Reichweite dieser Schnittstelle ist, vor allem um eine gewisse Abhörsicherheit zu erzielen, auf etwa 1 m begrenzt.

Es besteht ein Bedarf an Fernbedienungen bzw. tragbaren Computern, mit denen die Möglichkeit besteht, höhere Reichweiten zu erzielen, vorzugsweise

Reichweiten im Bereich von 5 bis 25 m. Insbesondere sollten herkömmliche Geräte, wie z. B. die oben angesprochenen tragbaren Computer, die ursprünglich nicht zur Datenübertragung über derartig große Distanzen ausgelegt sind, zur Fernbedienung von Geräten mit entsprechend großer Reichweite nutzbar gemacht werden können.

Bei aus dem Stand der Technik bekannten Fernbedienungen ist die nutzbare Reichweite vor allem durch die geringe Intensität der von der Sendevorrichtung ausgesandten Signale begrenzt. Beispielsweise bei einer üblichen Infrarot-Fernbedienung ergibt sich eine Reichweitenbegrenzung durch die verwendeten niedrigen Stromstärken bei der Bestromung der Infrarot-Sendevorrichtung. Die daraus resultierenden geringen Intensitäten des Infrarotlichts begrenzen die Reichweite.

Zur Lösung dieser Problematik schlägt US 6,114,830 A eine Fernbedienung vor, deren Infrarot-Sendevorrichtung über einen Kondensator mit Energie versorgt wird. Der Kondensator wird in Sendepausen zwischen zu sendenden Pulsen über eine Batterie wieder aufgeladen. Durch diese Ausgestaltung einer Fernbedienung kann eine größere maximale Reichweite erhalten werden, da die Sendevorrichtung relativ große Energiemengen von dem Kondensator erhält, die nicht allein mit der Batterie erzeugt werden könnten, die in bekannten tragbaren Computern oder Fernbedienungen vorhanden ist.

Fernbedienungen mit ähnlicher Ausgestaltung der Energieversorgung einer Sendevorrichtung sind aus US 5,093,744 A und US 5,631,503 A bekannt. Auch bei diesen Fernbedienungen ist jeweils zur Batterie ein zusätzlicher Energiespeicher vorgesehen, der es ermöglicht, kurzzeitig während des Sendebetriebs die zur Erreichung einer hohen Reichweite erforderliche Energie bereitzustellen. Während des Sendebetriebs wird die Sendevorrichtung im Wesentlichen aus dem Energiespeicher mit Energie versorgt. Während der Sendepausen wird der Energiespeicher aufgeladen.

Nachteilig bei diesen bekannten Fernbedienungen ist, dass der einzig vorhandene Kondensator in den Pulspausen der zu senden Daten allein über die Batterie der Fernbedienung nachgeladen wird. Hierdurch ist nicht sichergestellt, dass der Kondensator in den Pulspausen über einen Mindestenergiegehalt nachgeladen wird, was wiederum zu einer unzureichenden Energieversorgung der Sendevorrichtung führt.

Hiervon ausgehend ist es die Aufgabe der Erfindung, ein Verfahren zur Übertragung von Daten sowie eine entsprechende Datenübertragungsvorrichtung bereitzustellen, bei denen eine für den Sendebetrieb der Sendevorrichtung ausreichende Energieversorgung unter nahezu allen Betriebsbedingungen sichergestellt ist.

Diese Aufgabe löst die Erfindung durch ein Verfahren der eingangs angegebenen Art dadurch; dass zur Versorgung der Sendevorrichtung mit elektrischer Energie wenigstens zwei Energiespeicher vorgesehen sind, wobei die Sendevorrichtung durch eine die zu sendenden Daten repräsentierende Abfolge von elektrischen Pulsen und Pulspausen angesteuert wird, die Sendevorrichtung bei der Ansteuerung durch einen elektrischen Puls im Wesentlichen aus einem ersten Energiespeicher mit elektrischer Energie versorgt wird, der erste Energiespeicher während der Pulspausen innerhalb der Abfolge im Wesentlichen aus einem zweiten Energiespeicher aufgeladen wird, und beide Energiespeicher in Sendepausen zwischen zu sendenden Daten durch eine Energieversorgung aufgeladen werden.

Die Aufgabe wird außerdem bei einer Datenübertragungsvorrichtung der eingangs genannten Art dadurch gelöst, dass zur Versorgung der Sendevorrichtung mit elektrischer Energie wenigstens zwei Energiespeicher vorgesehen sind, wobei die Sendevorrichtung durch eine die zu sendenden Daten repräsentierende Abfolge von elektrischen Pulsen und Pulspausen ansteuerbar ist, die Sendevorrichtung bei der Ansteuerung durch einen elektrischen Puls ihre Energie im Wesentlichen aus einem ersten Energiespeicher bezieht, der erste Energiespeicher während der Pulspausen innerhalb der Abfolge im Wesentlichen durch in einem zweiten Energiespeicher gespeicherte Energie nachladbar ist, und beide Energiespeicher in Sendepausen zwischen zu sendenden Daten durch eine Energieversorgung nachladbar sind.

Erfindungsgemäß werden kurzzeitig genügend hohe Ströme zur Erreichung einer hohen Lichtintensität und somit auch zur Erreichung einer hohen Reichweite für jeden elektrischen Puls, der in einen Lichtpuls umgesetzt wird, aus dem ersten Energiespeicher, beispielsweise einem entsprechenden Kondensator, bereitgestellt. Dieser sollte entsprechend ausgelegt sein, um die benötigten Ströme, z. B. von mehr als 100 mA, vorzugsweise von mehreren 100 mA, kurzfristig für die Dauer des jeweiligen elektrischen Pulses bereitzustellen. Zum Aufladen des zweiten Energiespeichers genügt eine Energieversorgung, beispielsweise eine Stromquelle, wie sie in üblichen elektronischen Geräten, wie z. B. in tragbaren Computern, verfügbar ist. Als Energiespeicher können gemäß der Erfindung z. B. geeignet dimensionierte Kondensatoren oder aufladbare Akkumulatoren verwendet werden.

Gemäß der Erfindung ist demnach ein zweiteiliger Energiespeicher als Puffer vorgesehen, der innerhalb größerer Zeiträume, also in den zur Verfügung stehenden Sendepausen, nachgeladen wird, wobei die kurzfristig benötigten hohen Ströme aus dem Puffer, nämlich zunächst aus dem ersten Energiespeicher und durch Wiederaufladung aus dem zweiten Energiespeicher bezogen werden. Selbstverständlich ist die Wiederaufladung des Energiespeichers nicht auf die Zeiträume der Sendepausen beschränkt. Eine Aufladung über die Energieversorgung kann auch parallel während des Sendebetriebs erfolgen.

Eine Energieversorgung, insbesondere eine Stromquelle, zur Aufladung der beiden Energiespeicher, insbesondere von zwei in einer erfindungsgemäßen Datenübertragungsvorrichtung vorgesehenen Kondensatoren, kann durch jegliche Art der Energieversorgung bereitgestellt werden, wie beispielsweise durch standardmäßig vorhandene Energieversorgungen von elektrischen oder elektronischen Geräten, mit denen das erfindungsgemäße Verfahren betrieben werden kann. Für die Nachladung kommt es nicht auf die kurzzeitige Bereitstellung hoher Ströme an. In den Sendepausen kann, wie oben bereits erläutert, in der zur Verfügung stehenden Zeit ohne weiteres die Nachladung aus einer Stromquelle geringer Leistung erfolgen. Der wesentliche Vorteil ist, dass eine Energieversorgung ausreicht, die für sich genommen für die Erzeugung entsprechend hochintensiver Infrarot-Lichtsignale nicht ausreichen würde.

Nach einer sinnvollen Ausgestaltung der Erfindung sind die zeitliche Dauer einer Sendepause, d. h. der zeitliche Abstand zwischen den zu sendenden Daten innerhalb einer Abfolge von mehreren zu sendenden Daten, und die Ladezeitkonstante des ersten Energiespeichers in der Weise aufeinander abgestimmt, dass der erste Energiespeicher während einer Sendepause bis über einen Mindestenergiegehalt aufgeladen wird. Die Dauer der Sendepause muss, anders ausgedrückt, lang genug sein, um über die zur Verfügung stehende Energieversorgung den ersten Energiespeicher wieder aufzuladen, so dass für die als Nächstes zu sendenden Daten eine ausreichende Energiemenge kurzfristig von der Sendevorrichtung aus dem ersten Energiespeicher bezogen werden kann. Da die zeitliche Dauer der Sendepause geeignet angepasst werden kann, besteht die Möglichkeit, den gemäß der Erfindung eingesetzten ersten Energiespeicher mit geringen Strömen wieder aufzuladen, so dass an die Leistungsfähigkeit der Energieversorgung keine besonderen Anforderungen zu stellen sind. Selbst eine Energieversorgung geringster Leistung, wie sie beispielsweise in tragbaren elektronischen Geräten zur Verfügung steht, reicht zur Durchführung des erfindungsgemäßen Verfahrens aus.

Gemäß einer vorteilhaften Weiterbildung der Erfindung ist vorgesehen, dass vor oder bei dem Aussenden der Daten die Daten in Sendedaten gewandelt werden, zumindest dadurch, dass jedem zu sendenden Datenbit ein zu diesem Datenbit invertiertes Datenbit folgt. Dieses Vorgehen hat den Vorteil, dass zeitlich vor oder bei der tatsächlichen Aussendung von Daten an ein fernzubedienendes Gerät eine Umwandlung des z. B. als Bitfolge vorliegenden Befehls in Sendedaten erfolgen kann. Beispielsweise kann eine derartige Umwandlung mittels eines Mikroprozessors, insbesondere eines UART, in Sendedaten erfolgen. UART ist die Abkürzung für Universal Asynchronuous Receiver Transmitter. Die Funktion eines solchen Mikroprozessors ist es, einen seriellen digitalen Datenstrom mit einem fixen Rahmen aufzubauen, welcher aus einem Startbit, einer bestimmten Anzahl von Datenbits, einem optionalen Parity-Bit zur Erkennung von Übertragungsfehlern und einem Stopp-Bit besteht. Ein UART dient sowohl zum Senden als auch zum Empfangen solcher Datenrahmen. Dadurch, dass nach der Wandlung der zu sendenden Daten jedem Datenbit ein zu diesem Datenbit invertiertes Datenbit folgt, ist sichergestellt, dass nie mehr als zwei gleiche Bits in dem gewandelten Datenstrom aufeinander folgen. Dadurch lässt sich ein gleichstromfreies Signal erreichen. Unzulässige Bitkombinationen können leicht erkannt werden. Außerdem ist das Verfahren selbsttaktend, d. h., dass der gesendete Datenstrom zur Synchronisation des Taktes bei der Datenübertragung auf der Empfangsseite verwendet werden kann.

Wenn die Sendedaten in der Weise vor oder bei dem Aussenden der Daten gewandelt werden, dass jedem zu sendenden Datenbit ein zu diesem Datenbit invertiertes Datenbit folgt, ergibt sich der Vorteil, dass der erste Energiespeicher nicht mehr gespeicherte Energie benötigt als für das aufeinander folgende Senden von zwei Pulsen benötigt wird, da nie mehr als zwei gleiche Bits unmittelbar aufeinander folgen. Der sodann entleerte erste Energiespeicher kann in der aufgrund der Art der Datenwandlung zwingend folgenden Pulspause auf jeden Fall aus dem zweiten Energiespeicher nachgeladen werden.

Gemäß einer praktischen Ausgestaltung der Erfindung kann die Sendevorrichtung eine Infrarot-Sendevorrichtung sein, insbesondere eine Infrarot-Diode, wobei die Infrarot-Sendevorrichtung durch die die zu sendenden Daten repräsentierende Abfolge von elektrischen Pulsen und Pulspausen angesteuert wird.

Wie sich aus den obigen Ausführungen ergibt, sollten sinnvollerweise der minimale zeitliche Abstand zwischen zwei elektrischen Pulsen und die Lade- und Entladezeitkonstanten des ersten und zweiten Energiespeichers gemäß der Erfindung aneinander derart angepasst sein, dass wenigstens die während eines Pulses aus dem ersten Energiespeicher entnommene Energiemenge während einer Pulspause im Wesentlichen vom zweiten Energiespeicher in den ersten Energiespeicher transferiert wird. Des Weiteren sollten, wie oben bereits erwähnt, die zeitliche Dauer einer Sendepause, d. h. der zeitliche Abstand zwischen den zu sendenden Daten, und die Ladezeitkonstante des zweiten Energiespeichers in der Weise aufeinander abgestimmt sein, dass der Energiespeicher während einer Sendepause bis über einen Mindestenergiegehalt wieder aufgeladen werden kann. Auf diese Weise ist sichergestellt, dass in allen denkbaren Situationen eine ausreichende Energie zur Erzeugung der für die gewünschte Reichweite erforderlichen hochintensiven Infrarot-Lichtimpulse zur Verfügung steht.

Wie oben beschrieben, werden bei dem erfindungsgemäßen Verfahren die zu sendenden Daten vorzugsweise mittels eines Mikroprozessors, insbesondere eines UART in Sendedaten gewandelt. Das UART erzeugt die Sendedaten als Abfolge von elektrischen Pulsen und Pulspausen, die seriell an ein mit dem UART verbundenes, steuerbares Schaltmittel übertragen werden. Mittels des Schaltmittels wird der Stromfluss durch die Infrarot-Sendevorrichtung in Abhängigkeit von der Abfolge der Pulse und Pulspausen geschaltet. Das UART erzeugt, wie oben bereits erwähnt, den seriellen digitalen Datenstrom der Sendedaten mit einem fixen Rahmen, d. h., dass jeweils eine konstante Anzahl von Pulsen und Pulspausen erzeugt wird. Dadurch ist sichergestellt, dass die Übertragung der zu sendenden Daten, beispielsweise eines Befehls zur Fernbedienung eines Gerätes, unabhängig davon, ob diese Daten noch in ein bestimmtes Sende- und/oder Empfangsprotokoll eingebunden sind, immer die gleiche Zeit in Anspruch nimmt. Nach der hierdurch gegebenen Sendezeit erfolgt immer eine Sendepause, die genügend lang ausgelegt werden kann, um eine ausreichende Nachladung der Energiespeicher innerhalb der Sendepause zu gewährleisten.

Eine Sendepause kann beispielsweise dadurch erzielt werden, dass zwischen zu sendenden Daten an das Ende von Sendedaten jeweils eine Folge von Pulspausen, insbesondere ein Null-Byte, angefügt wird.

Die Beeinflussung der bei dem erfindungsgemäßen Verfahren relevanten Zeiten, also z. B. der zeitliche Abstand zwischen Sendedaten sowie auch der minimale zeitliche Abstand zwischen zwei einzelnen elektrischen Pulsen, kann zum einen durch die Auswahl eines geeigneten Sende- und/oder Empfangsprotokolls bewerkstelligt werden. Zum anderen können die Zeiten durch die zeitliche Taktung, mit der die Sendedaten, beispielsweise über den seriellen Ausgang des UART an das Schaltmittel zur Schaltung des Stromflusses durch die Infrarot-Sendevorrichtung übertragen werden, beeinflusst werden. Durch die Taktung des UART bzw. des entsprechenden Mikroprozessors, der diese Aufgabe übernimmt, sind sowohl der minimale zeitliche Abstand zwischen den elektrischen Pulsen und Pulspausen als auch die Sendepause jeweils am Ende von Sendedaten beeinflussbar, insbesondere wenn die Sendepause durch Anfügen von Null-Bytes an das Ende der Sendedaten erzeugt wird.

Wenn bei dem erfindungsgemäßen Verfahren, wie oben beschrieben, die Sendedaten so erzeugt werden, dass jedem Datenbit das jeweils invertierte Bit folgt, ergibt sich der weitere Vorteil, dass das ausgesendete Signal eine hohe Periodizität, d. h. einen häufigen Wechsel zwischen "0"- und "1"-Pegeln hat. Eine üblicherweise empfängerseitig vorgesehene Verstärkerschaltung, wie z. B. eine so genannte AGC-Schaltung (Automatic Gain Control) erhält dann ein im Wesentlichen konstantes mittleres Nutzsignal. Die Verstärkerschaltung behält dann eine im Wesentlichen konstante Verstärkung durchweg bei. Dies trägt dazu bei, Empfangsfehler zu vermeiden, die beispielsweise dadurch entstehen können, dass zwischen zwei Lichtpulsen ein zu großer zeitlicher Abstand entsteht. Ein solcher zeitlicher Abstand könnte bewirken, dass die Verstärkerschaltung auf eine höhere Verstärkung eingestellt wird. Dies wiederum könnte zur Folge haben, dass bei einem nachfolgend empfangenen Lichtpuls eine Übersteuerung auftritt.

Zur Durchführung des erfindungsgemäßen Verfahrens eignet sich eine Datenübertragungsvorrichtung, bei der die Sendevorrichtung eine Infrarot-Sendevorrichtung ist, insbesondere eine Infrarot-Diode, die mit einem der Infrarot-Sendevorrichtung zugeordneten Schaltmittel in Serie geschaltet ist, welches den Stromfluss durch die Infrarot-Sendevorrichtung in Abhängigkeit von der die zu sendenden Daten repräsentierenden Abfolge von elektrischen Pulsen und Pulspausen schaltet. Als Schaltmittel eignet sich beispielsweise ein herkömmlicher Transistor. Parallel zur Serienschaltung von Infrarot-Sendevorrichtung und Schaltmittel sind wenigstens zwei Energiespeicher geschaltet, die vorzugsweise als Parallel- oder Serienschaltung von wenigstens zwei Kondensatoren gegeben sind. Eine besonders vorteilhafte Ausgestaltung ergibt sich dadurch, dass parallel zur Serienschaltung von Infrarot-Sendevorrichtung und Schaltmittel eine Parallelschaltung von zwei Kondensatoren angeordnet ist, wobei die Lade- und Endladezeitkonstanten der beiden Kondensatoren derart gewählt sind, dass die Infrarot-Sendevorrichtung bei Ansteuerung mit einem elektrischen Impuls ihre Energie im Wesentlichen aus einem der beiden Kondensatoren bezieht und in einer Pulspause dieser Kondensator im Wesentlichen durch in dem anderen Kondensator gespeicherte Energie nachladbar ist. Diese Parallelschaltung der beiden Kondensatoren kann dann in Reihe liegen mit der Energieversorgung der Datenübertragungsvorrichtung, wobei die zeitlich längere Ladezeitkonstante der beiden Kondensatoren derart gewählt ist, dass in einer Sendepause zwischen Sendedaten beide Kondensatoren durch die Energieversorgung bis über einen Mindestenergiegehalt nachladbar sind.

Alternativ kann die Sendevorrichtung eine Funk- oder eine Ultraschall-Sendevorrichtung sein.

Gemäß einer besonders bevorzugten Ausgestaltung der Erfindung ist die Datenübertragungsvorrichtung als ein mit einem tragbaren Computer, insbesondere einem PDA, über eine standardisierte Schnittstelle, insbesondere eine SD-Kartenschnittstelle, verbindbares Modul ausgebildet, wobei die Energieversorgung der Datenübertragungsvorrichtung dem tragbaren Computer zugeordnet ist, so dass die beiden Energiespeicher des Moduls über die Schnittstelle aufladbar sind. Geeignete SD-Kartenschnittstellen sind oftmals bei PDAs an deren Oberseite angeordnet, so dass die Sendevorrichtung des in den tragbaren Computer eingesteckten Moduls von dem Benutzer weg weist und zu dem zu bedienenden Gerät hinweist. Durch die Ausgestaltung der Datenübertragungsvorrichtung als mit einem tragbaren Computer verbindbares Modul kann ein solcher tragbarer Computer mit einer Datenübertragungsvorrichtung ausgestattet werden, die eine wesentlich größere Reichweite hat als die in einen solchen tragbaren Computer üblicherweise standardmäßig integrierten Datenübertragungsvorrichtungen, wie beispielsweise die oben bereits erwähnte IrDA-Schnittstelle. Die Aufladung der beiden Energiespeicher der erfindungsgemäßen Datenübertragungsvorrichtung erfolgt über die Schnittstelle, über die das Modul mit dem tragbaren Computer verbunden ist. Die von der Schnittstelle bereitgestellte Energieversorgung hat normalerweise nur eine geringe Leistung. Diese Leistung würde für sich genommen nicht zur Erzeugung der benötigten Sendesignale hoher Leistung ausreichen. Die Energieversorgung der Schnittstelle wird gemäß der Erfindung nur zum Aufladen der beiden Energiespeicher genutzt. Hierfür reicht eine Energieversorgung geringer Leistung aus. Die während des Sendebetriebs benötigte hohe Leistung wird im Wesentlichen aus den beiden Energiespeichern des Moduls bezogen.

Wenn die erfindungsgemäße Datenübertragungsvorrichtung, wie zuvor beschrieben, als mit einem Computer verbindbares Modul ausgebildet ist, kann vorteilhafterweise das Datenverarbeitungsgerät zur Wandlung der zu sendenden Daten in Sendedaten und zur Übertragung der Sendedaten als Abfolge von Pulsen und Pulspausen über die Schnittstelle eingerichtet sein. Bei dieser Ausgestaltung kann das Modul besonders kostengünstig hergestellt werden, da das Sendemodul nur sehr wenige Komponenten, insbesondere die Sendevorrichtung und die beiden Energiespeicher, umfassen muss. Die zur Fernsteuerung und/oder Fernabfrage eines elektrischen Geräts benötigte "Intelligenz" kann vollständig durch Software auf dem tragbaren Computer implementiert sein. Die Sendedaten werden auf dem tragbaren Computer berechnet und als Abfolge von Pulsen und Pulspausen über die Schnittstelle an das Modul übertragen, beispielsweise an das Schaltmittel zur Ansteuerung der Infrarot-Sendevorrichtung des Moduls.

Heutzutage sind Pumpen, wie z. B. elektronisch geregelte Heizungspumpen, mit einer Vielzahl von Funktionen ausgestattet. Aus Kostengründen ist es aber nicht wünschenswert, solche Pumpen mit umfangreichen Bedienelementen zur Steuerung der Funktionen zu versehen. Sinnvollerweise verwendet man Bedien- und Servicegeräte zur komfortablen Fernbedienung solcher Pumpen. Hierzu sind die Pumpen mit geeigneten Infrarot-Schnittstellen ausgestattet. Die erfindungsgemäße Datenübertragungsvorrichtung eignet sich besonders gut zur Verwendung zur Fernsteuerung und/oder Fernabfrage einer Pumpe, insbesondere wenn, wie zuvor beschrieben, die Datenübertragungsvorrichtung als ein mit einem tragbaren Computer, insbesondere einem PDA, über eine standardisierte Schnittstelle, insbesondere eine SD-Kartenschnittstelle, verbindbares Modul ausgebildet ist. Die hohe Reichweite der erfindungsgemäßen Datenübertragungsvorrichtung ermöglicht es, Pumpen, die an mehr oder weniger schlecht zugänglichen Stellen montiert sind, über größere Distanzen hinweg fernzusteuern und/oder fernabzufragen. Der tragbare Computer kann komfortabel zur Ausführung verschiedener Funktionen im Rahmen der Fernsteuerung und/oder Fernabfrage eingerichtet sein. Mittels des Computers sind beispielsweise die Erfassung, Speicherung und statistische Auswertung von Betriebsdaten der Pumpe möglich. Außerdem kann die Bedienschnittstelle des Computers genutzt werden, um die Betriebsparameter der Pumpe interaktiv abzufragen und zu verstellen. Außerdem kann die Software den Verbindungsaufbau zu einer von einem Benutzer der Vorrichtung auswählbaren Pumpe sowie ein geeignetes bidirektionales Datenübertragungsprotokoll zwischen der Datenübertragungsvorrichtung und der ausgewählten Pumpe steuern. Ein derartiger Verbindungsaufbau sowie ein entsprechendes Datenübertragungsprotokoll sind erforderlich, da häufig bei engen Einbaubedingungen (z. B. mehrere Pumpen nebeneinander) vermieden werden muss, dass unterschiedliche Pumpen gleichzeitig angesprochen werden. Ein gezielter Verbindungsaufbau und ein bidirektionales Datenübertragungsprotokoll sorgen für einen korrekten Datenaustausch zwischen der gewünschten Pumpe und dem tragbaren Computer. Auf dem Computer sind mit geringem Aufwand vielfältige Funktionen zur Auswertung, Speicherung und Dokumentation von Betriebsparametern der Pumpe implementierbar. So lässt sich beispielsweise auf dem Display des Computers die hydraulische Leistung (Volumenstrom) der jeweiligen Pumpe in einer statistischen Aufbereitung (Histogramm) betrachten. Somit wird ein Belastungsprofil der hydraulischen Anlage über den Verlauf einer definierbaren Betriebsperiode erkennbar.

Die Ausgestaltung der erfindungsgemäßen Datenübertragungsvorrichtung zur Fernsteuerung und/oder Fernabfrage von Pumpen als mit einem tragbaren Computer verbindbares Modul hat außerdem den Vorteil, dass die Monteure derartiger Pumpen kein aufwendiges und teures Bedien- und Servicegerät für einen speziellen Pumpentyp erwerben müssen. Ein tragbarer Computer kann universell eingesetzt werden und ist ohnehin häufig bereits vorhanden. Das mit dem Computer über die standardisierte Schnittstelle verbindbare Modul, ist, wie oben erläutert, zu geringen Kosten erhältlich.

Ausführungsbeispiele der Erfindung werden im Folgenden anhand der Zeichnungen näher erläutert. Es zeigen:
- Fig. 1: Darstellung der erfindungsgemäßen Vorrichtung in Form eines Schaltbildes;
- Fig. 2: Umwandlung von zu sendenden Daten in Sendedaten;
- Fig. 3: gemäß der Erfindung verwendbares Sendeprotokoll;
- Fig. 4: Steuerdaten des Sendeprotokolls;
- Fig. 5: Ausgestaltung der erfindungsgemäßen Vorrichtung als mit einem tragbaren Computer verbindbares Modul.

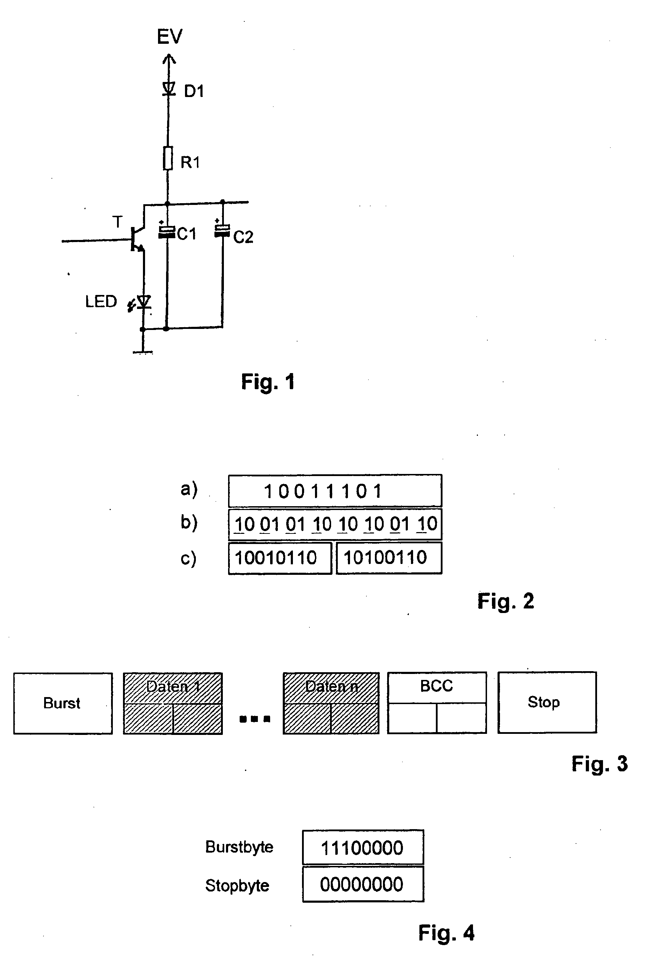

Die Fig. 1 zeigt eine Infrarot-Diode LED als Sendevorrichtung. Die Diode LED kann z. B. vom Typ LD274 sein. Die Diode LED ist in Reihe mit einem Schaltmittel, nämlich einem Transistor T, beispielsweise vom Typ FMMT614, geschaltet. Parallel zu der Anordnung aus Diode LED und Transistor T sind zwei Kondensatoren C1 und C2 geschaltet, die zur Durchführung des erfindungsgemäßen Verfahrens den ersten und zweiten Energiespeicher bilden. Bei dem Kondensator C1 kann es sich z. B. um einen 1.000 µF Tantal-Kondensator handeln, der zum Betrieb mit 6 V geeignet ist. Der Kondensator C2 kann ein 100.000 µF, 5 V-tauglicher Goldkondensator sein.

Die gesamte Parallelschaltung aus Diode LED, Transistor T und den Kondensatoren C1, C2 liegt in Reihe zu einer Energieversorgung EV über einen Widerstand R1 von z. B. 47 Ω. Mit dem Widerstand R1 ist eine Diode D1 in Serie geschaltet. Bei der Energieversorgung EV kann es sich um eine 3,3 V-Stromversorgung z. B. eines tragbaren Computers, wie insbesondere eines PDAs, handeln. Dem Transistor T werden über dessen Basisanschluss eine die zu sendende Daten repräsentierende Abfolge von elektrischen Pulsen und Pulspausen zugeführt. Der Transistor schaltet entsprechend der zeitlichen Abfolge der elektrischen Pulse und Pulspausen die Infrarot-Diode LED ein und aus.

Die Ladezeitkonstanten der Kondensatoren C1 und C2 in der Gesamtschaltung, die in der Fig. 1 dargestellt ist, ergeben sich im Wesentlichen durch die Widerstände und Induktivitäten des Transistors T sowie der Infrarot-Diode LED. Die Zeitkonstanten werden so gewählt, dass benötigte kurzzeitige Strompulse, die über den Transistor T durch die Diode LED geleitet werden, aus dem Kondensator C1 bezogen werden, wobei dieser während einer Pulspause, d. h. wenn kein Signal an der Basis des Transistors T anliegt, aus dem Kondensator C2 nachgeladen wird. Während des Aussendens der Sendedaten in Form von Lichtimpulsen mittels der Diode LED wird der Energiegehalt des Kondensators C2 kontinuierlich abgebaut. Durch das oben beschriebene Sendeprotokoll und die Datenaufbereitung ist gewährleistet, dass nach einer vorgegebenen Zeitdauer, die sich im Wesentlichen durch die zu sendenden Daten und das ggf. verwendete Sende- und Empfangsprotokoll ergibt, eine Nachladung der beiden Energiespeicher C1 und C2, d. h. vor allem des zweiten Energiespeichers C2, erfolgt. Durch die externe Beschaltung der Kondensatoren C1 und C2 über die Diode D1 und den Widerstand R1 ist gewährleistet, dass während einer ausreichend langen Sendepause, die innerhalb des Sende-/Empfangsprotokolls vorgesehen ist, eine Nachladung der gesamten Kondensatoranordnung erfolgt, so dass für die als Nächstes zu übertragenden Sendedaten eine ausreichende Energie zur Verfügung steht.

Durch die in der Fig. 1 dargestellte Schaltung ist sichergestellt, dass die Infrarot-Diode LED kurzfristig größere Ströme aus dem Kondensator C1 beziehen kann, als dies direkt über die 3,3 V-Stromversorgung EV möglich wäre. Es besteht so die Möglichkeit, mittels der Schaltung hochreichweitige Infrarot-Signale zu erzeugen. Dabei kann die Schaltung auch an Geräten mit einer Stromversorgung betrieben werden, die für sich genommen keine genügend hohen Stromstärken bereitzustellen in der Lage ist, wie beispielsweise an einer SD-Kartenschnittstelle eines PDAs.

Das Verfahren der Aufbereitung der zu sendenden Daten wird im Folgenden anhand der Fig. 2 näher erläutert. In der Fig. 2a ist ein auszusendendes

Befehlsbyte dargestellt, welches über die in der Fig. 1 dargestellte Vorrichtung an ein (nicht dargestelltes) empfangendes Gerät übertragen werden soll. Der hier beispielhaft gezeigte Befehl bewirkt die Ausführung einer bestimmten Aktion des zu steuernden Gerätes. Gemäß der Erfindung ist vorgesehen, dass, wie in der Fig. 2b gezeigt, das zu sendende Datenbyte in Sendedaten umgewandelt wird. Dabei wird an jedes Bit des ursprünglich zu sendenden Datenbytes das jeweils invertierte Bit angefügt. In der Fig. 2b sind jeweils unterstrichen die ursprünglichen Bits zu erkennen, denen jeweils das invertierte Bit folgt. Es ist hier erkennbar, dass es keine Konstellation gibt, bei der mehr als zwei identische Bits aufeinander folgen. Dies hat den Vorteil, dass es immer eine kurzperiodische Abfolge von 0 und 1 gibt, die, wie oben erläutert, bezüglich einer automatischen Verstärkungsschaltung auf Empfängerseite vorteilhaft ist. Auch wird durch die Datenumwandlung erreicht, dass unabhängig von der Anzahl von 1 und 0 in dem ursprünglichen Datenbyte im zu sendenden Datenstrom immer eine identische Anzahl von 0 und 1 enthalten ist. Die für die Aussendung der Sendedaten benötigte Energiemenge ist daher vorab bekannt und stets dieselbe, so dass die Komponenten der in der Fig. 1 dargestellten Schaltung entsprechend dimensioniert werden können. Die Kapazität des Kondensators C2 kann so ausgelegt werden, dass aus diesem zunächst der Kondensator C1 nachgeladen und aus diesem wiederum die Bestromung der Leuchtdiode LED erfolgen kann, um die dargestellten Sendedaten auszusenden. Ergänzend kann vorgesehen sein, dass vor und/oder nach den zu sendenden Daten Protokolldaten angefügt sind. In der Fig. 2c ist angedeutet, dass die in der Fig. 2b dargestellten Sendedaten blockweise zu jeweils acht Bit ausgesendet werden. Die für die Aussendung der dargestellten Bitfolge benötigte Energie kann nach oben hin abgeschätzt werden, so dass die Kondensatoren in der erfindungsgemäßen Vorrichtung entsprechend auslegbar sind.

In der Fig.3 ist ein mögliches Datenübertragungsprotokoll dargestellt. Erkennbar ist hier, dass zur Aussendung einer Datenfolge, beispielsweise einer Folge von Befehlen zur Fernbedienung eines Gerätes, die aus den Daten 1 bis n zusammengesetzt ist, zunächst so genannte Burst-Daten gesendet werden, die eine Empfängerschaltung darauf vorbereiten, dass Befehlsdaten folgen. Gemäß Fig. 4 kann als Burst-Daten ein Burstbyte vorgesehen sein, welches den in der Figur dargestellten Bit-Aufbau hat. Das verwendete Burstbyte kann so aufgebaut sein, dass es zum einen nicht mit den eigentlichen Befehlsdaten verwechselt werden kann. Zweites sollte das Burstbyte auf die empfängerseitig verwendete Verstärkungsregelung abgestimmt sein.

An die Befehlsdaten 1 bis n schließt sich eine Prüfsumme BCC an. Anhand der Prüfsumme ist feststellbar, ob die Daten korrekt empfangen wurden.

Im Anschluss an die Prüfsumme BCC folgt ein so genanntes Stoppbyte, welches in dem Ausführungsbeispiel aus einer Abfolge von acht 0 Bits besteht. Das Stoppbyte trägt dafür Sorge, dass in Abhängigkeit von dem Takt, mit dem die Daten an den Basisanschluss des Transistors T (siehe Fig. 1) übertragen werden und in Abhängigkeit von der Anzahl der Bits eine genügend lange Sendepause entsteht, die es erlaubt, die Kondensatoranordnung C1 und C2 aus der Stromquelle EV über den Widerstand R1 und die Diode D1 nachzuladen.

Die Lade- und Endladezeitkonstanten der beiden Kondensatoren C1 und C2 sind, wie oben erläutert, so gewählt, dass die Infrarot-Sendevorrichtung LED bei der Ansteuerung des Transistors T mit einem elektrischen Puls den benötigten Strom im Wesentlichen aus einem der beiden Kondensatoren, nämlich bei dem Ausführungsbeispiel aus dem Kondensator C1 bezieht, wobei in einer Pulspause der Kondensator C1 im Wesentlichen aus dem anderen Kondensator C2 nachgeladen wird. Selbstverständlich erfolgt ein Nachladen der Kondensatoranordnung auch während der elektrischen Pulse aus der Geräteenergieversorgung EV. Die Gesamtanordnung aus C1 und C2 wird nicht nur während einer Pulspause, sondern kontinuierlich auch während der Infrarot-Aussendung aus der Geräteenergieversorgung EV geladen. Die Geräteenergieversorgung EV muss jedoch nicht so ausgelegt sein, dass sie die für eine ausreichende Reichweite bei der Erzeugung von Infrarot-Lichtimpulsen benötigten hohen Ströme bereitzustellen in der Lage ist. Die hohen Ströme werden kurzzeitig aus den jeweiligen Kondensatoren bezogen, wie es oben im Einzelnen beschrieben wurde. Die Anordnung aus den Kondensatoren C1 und C2 stellt somit einen Energiepuffer dar, der kurzfristig für die Leuchtdiode LED eine hohe Stromstärke zur Verfügung stellen kann und der mit einer wesentlich längeren Zeitkonstante kontinuierlich oder zumindest im Wesentlichen während der Sendepausen aus der Geräteenergieversorgung EV nachgeladen wird.

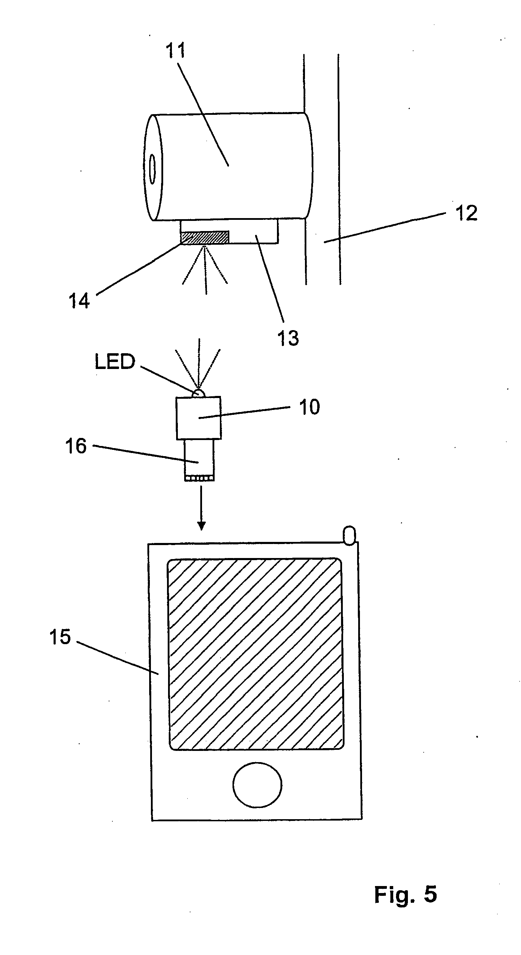

Die Fig. 5 zeigt schematisch eine erfindungsgemäße Datenübertragungsvorrichtung 10. Diese dient zur Fernsteuerung und Fernabfrage einer Pumpe 11. Die Pumpe fördert Wasser durch eine Rohrleitung 12. Die Pumpe 11 ist elektronisch geregelt. Die Steuerungs- und Regelungseinheit der Pumpe ist in einem an der Pumpe angebrachten Klemmenkasten 13 angeordnet. Die Steuerungs- und Regelungseinheit weist eine Infrarot-Empfangseinrichtung 14 auf, über welche die Pumpe 11 fernsteuerbar und fernabfragbar ist. Die Datenübertragungsvorrichtung 10 ist als ein mit einem tragbaren Computer 15, nämlich einem PDA über eine SD-Kartenschnittstelle verbindbares Modul ausgebildet. Die Datenübertragungsvorrichtung 10 wird, wie in der Fig. 5 durch den Pfeil angedeutet, an der Oberseite des PDAs in den entsprechenden SD-Kartenschlitz eingesteckt. Hierzu weist das Modul 10 einen entsprechenden Anschlussabschnitt 16 auf. Der PDA 15 ist zur Wandlung von zu sendenden Daten über das Modul 10 in Sendedaten und zur Übertragung der gewandelten Sendedaten als Abfolge von Pulsen und Pulspausen, wie oben beschrieben, über die SD-Kartenschnittstelle eingerichtet. Außerdem weist der tragbare Computer eine Software auf, mittels der Betriebsdaten der Pumpe 11 erfasst, gespeichert und statistisch ausgewertet werden können. Außerdem können die Betriebsparameter der Pumpe 11 über das Modul 10 abgefragt und mittels des PDAs 15 interaktiv verstellt werden. Schließlich steuert der PDA den gesamten Verbindungsaufbau zu der Pumpe 11 sowie das für eine korrekte Datenübertragung erforderliche bidirektionale Datenübertragungsprotokoll. Die Energieversorgung der Datenübertragungsvorrichtung erfolgt über die SD-Kartenschnittstelle des PDAs. Dabei weist das Modul 10 wenigstens einen Energiespeicher auf, aus dem während des Sendebetriebs die Sendevorrichtung LED gespeist wird. Der Energiespeicher wird, wie oben ausführlich beschrieben, in den Sendepausen zwischen den zu sendenden Daten über die Energieversorgung der SD-Kartenschnittstelle wieder aufgeladen.

## Patentansprüche

1. Verfahren zur Übertragung von Daten mittels einer Sendevorrichtung (LED), zum Zwecke der Fernsteuerung und/oder Fernabfrage eines elektrischen Gerätes, insbesondere einer Pumpe, wobei
zur Versorgung der Sendevorrichtung mit elektrischer Energie wenigstens zwei Energiespeicher (C1, C2) vorgesehen sind, wobei die Sendevorrichtung (LED) durch eine die zu sendenden Daten repräsentierende Abfolge von elektrischen Pulsen und Pulspausen angesteuert wird, **dadurch gekennzeichnet, daß** die Sendevorrichtung (LED) bei der Ansteuerung durch einen elektrischen Puls im Wesentlichen aus einem ersten Energiespeicher (C1) mit elektrischer Energie versorgt wird, der erste Energiespeicher (C1) während der Pulspausen innerhalb der Abfolge im Wesentlichen aus einem zweiten Energiespeicher (C2) aufgeladen wird, und beide Energiespeicher (C1, C2) in Sendepausen zwischen zu sendenden Daten durch eine Energieversorgung (EV) aufgeladen werden.

2. Verfahren Anspruch 1, **dadurch gekennzeichnet, dass** die zeitliche Dauer einer Sendepause, d. h. der zeitliche Abstand zwischen den zu sendenden Daten, und die Ladezeitkonstante des ersten Energiespeichers (C1) in der Weise aufeinander abgestimmt sind, dass der erste Energiespeicher (C1) während einer Sendepause bis über einen Mindestenergiegehalt aufgeladen wird.

3. Verfahren nach Anspruch 1 oder 2, **dadurch gekennzeichnet, dass** vor oder bei dem Aussenden der Daten die Daten in Sendedaten gewandelt werden, zumindest dadurch, dass jedem zu sendenden Datenbit ein zu diesem Datenbit invertiertes Datenbit folgt.

4. Verfahren nach einem der Ansprüche 1 bis 3, **dadurch gekennzeichnet, dass** die Sendevorrichtung (LED) eine Infrarot-Sendevorrichtung, insbesondere eine Infrarot-Diode, ist.

5. Verfahren nach Anspruch 4, **dadurch gekennzeichnet, dass** der minimale zeitliche Abstand zwischen zwei elektrischen Pulsen und die Lade- und Entladezeitkonstanten des ersten und zweiten Energiespeichers (C1, C2) aneinander derart angepasst sind, dass wenigstens die während eines Pulses aus dem ersten Energiespeicher (C1) entnommene Energiemenge während einer Pulspause im Wesentlichen vom zweiten Energiespeicher (C2) in den ersten Energiespeicher (C1) transferiert wird.

6. Verfahren nach Anspruch 5, **dadurch gekennzeichnet, dass** die zeitliche Dauer einer Sendepause, d. h. der zeitliche Abstand zwischen den zu sendenden Daten, und die Ladezeitkonstante des zweiten Energiespeichers (C2) in der Weise aufeinander abgestimmt sind, dass der Energiespeicher (C2) während einer Sendepause bis über einen Mindestenergiegehalt wieder aufgeladen wird.

7. Verfahren nach einem der Ansprüche 4 bis 6, **dadurch gekennzeichnet, dass** zur Erzielung einer Sendepause zwischen zu sendenden Daten an das Ende von Sendedaten eine Folge von Pulspausen, insbesondere ein Null-Byte angefügt wird.

8. Verfahren nach einem der Ansprüche 4 bis 7, **dadurch gekennzeichnet, dass** die zu sendenden Daten mittels eines Mikroprozessors, insbesondere eines UART, in Sendedaten gewandelt werden und die Sendedaten als Abfolge von elektrischen Pulsen und Pulspausen seriell an ein ansteuerbares Schaltmittel (T) übertragen werden, mittels dem ein Stromfluss durch die Sendevorrichtung (LED) in Abhängigkeit von der Abfolge geschaltet wird.

9. Datenübertragungsvorrichtung zur Fernsteuerung und/oder Fernabfrage eines elektrischen Gerätes, insbesondere einer Pumpe, mit einer Sendevorrichtung (LED), wobei
zur Versorgung der Sendevorrichtung (LED) mit elektrischer Energie wenigstens zwei Energiespeicher (C1, C2) vorgesehen sind, wobei die Sendevorrichtung (LED) durch eine die zu sendenden Daten repräsentierende Abfolge von elektrischen Pulsen und Pulspausen ansteuerbar ist, **dadurch gekennzeichnet, daß** die Sendevorrichtung (LED) bei der Ansteuerung durch einen elektrischen Puls ihre Energie im Wesentlichen aus einem ersten Energiespeicher (C1) bezieht, der erste Energiespeicher (C1) während der Pulspausen innerhalb der Abfolge im Wesentlichen durch in einem zweiten Energiespeicher (C2) gespeicherte Energie nachladbar ist, und beide Energiespeicher (C1, C2) in Sendepausen zwischen zu sendenden Daten durch eine Energieversorgung (EV) nachladbar sind.

10. Vorrichtung nach Anspruch 9, **dadurch gekennzeichnet, dass** sie als ein mit einem tragbaren Computer (15), insbesondere einem PDA, über eine standardisierte Schnittstelle, insbesondere eine SD-Kartenschnittstelle, verbindbares Modul (10) ausgebildet ist, wobei die Energieversorgung (EV) dem tragbaren Computer (15) zugeordnet ist, so dass die Energiespeicher (C1, C2) des Moduls (10) über die Schnittstelle aufladbar sind.

11. Vorrichtung nach Anspruch 10, **dadurch gekennzeichnet, dass** der tragbare Computer (15) zur Wandlung von zu sendenden Daten in Sendedaten und zur Übertragung der Sendedaten als Abfolge von Pulsen und Pulspausen über die Schnittstelle eingerichtet ist.

12. Vorrichtung nach Anspruch 10 oder 11, **dadurch gekennzeichnet, dass** der tragbare Computer (15) durch Software eingerichtet ist zur Ausführung wenigstens einer der folgenden Funktionen:
- Erfassung, Speicherung und statistische Auswertung von Betriebsdaten von Pumpen (11),
- Abfrage und/oder Fernverstellung von Betriebsparametern von Pumpen (11),
- Steuerung eines Verbindungsaufbaus zu einer von einem Benutzer der Vorrichtung auswählbaren Pumpe (11) und Steuerung eines bidirektionalen Datenübertragungsprotokolls zwischen der Vorrichtung und der ausgewählten Pumpe (11).

13. Vorrichtung nach einem der Ansprüche 9 bis 12, **dadurch gekennzeichnet, dass** die Sendevorrichtung (LED) eine Infrarot-Sendevorrichtung (LED) ist, insbesondere eine Infrarot-Diode, die mit einem der Infrarot-Sendevorrichtung (LED) zugeordneten Schaltmittel (T) in Serie geschaltet ist, welches den Stromfluss durch die Infrarot-Sendevorrichtung (LED) in Abhängigkeit von der die zu sendenden Daten repräsentierenden Abfolge von elektrischen Pulsen und Pulspausen schaltet.

14. Vorrichtung nach Anspruch 13, **dadurch gekennzeichnet, dass** die beiden Energiespeicher (C1, C2) parallel zur Serienschaltung von Infrarot-Sendevorrichtung (LED) und Schaltmittel (T) geschaltet sind.

15. Vorrichtung nach Anspruch 14, **dadurch gekennzeichnet, dass** die beiden Energiespeicher (C1, C2) parallel zueinander geschaltet sind.

16. Vorrichtung nach Anspruch 15, **dadurch gekennzeichnet, dass** die Parallelschaltung der beiden Energiespeicher (C1, C2) in Reihe liegt mit der Energieversorgung (EV) und die zeitlich längere Ladezeitkonstante der beiden Energiespeicher (C1, C2) derart gewählt ist, dass in einer Sendepause zwischen Sendedaten beide Energiespeicher (C1, C2) durch die Energieversorgung (EV) bis über einen Mindestenergiegehalt nachladbar sind.

17. Vorrichtung nach einem der Ansprüche 9 bis 12, **dadurch gekennzeichnet, dass** die Sendevorrichtung eine Funk- oder eine Ultraschall-Sendevorrichtung ist.

18. Vorrichtung nach einem der Ansprüche 9 bis 17, **dadurch gekennzeichnet, dass** die Datenübertragungsvorrichtung als ein mit einem tragbaren Computer (15), insbesondere einem PDA, über eine standardisierte Schnittstelle, insbesondere eine SD-Kartenschnittstelle, verbindbares Modul (10) ausgebildet ist.

19. Verwendung einer Datenübertragungsvorrichtung nach einem der Ansprüche 9 bis 18 zur Fernsteuerung und/oder Fernabfrage einer Pumpe (11).

## Claims

1. A method of transmitting data by means of a transmitting device (LED) for the purposes of remote control and/or remote enquiry of an electric device, in particular a pump, wherein least two energy storage means (C1, C2) are provided for the supply of electric energy to the transmitting device, wherein the transmitting device (LED) is actuated by a sequence of pulses and pulse spaces, that represents the data to be transmitted, **characterised in that** the transmitting device (LED) is supplied with electric energy upon actuation by an electric pulse substantially from a first energy storage means (C1), the first energy storage means (C1) is charged during the pulse spaces within the sequence substantially from a second energy storage means (C2), and both energy storage means (C1, C2) are charged by an energy supply (EV) in transmission pauses between data to be transmitted.

2. A method according to claim 1 **characterised in that** the time duration of a transmission pause, that is to say the time spacing between the data to be transmitted, and the charging time constant of the first energy storage means (C1) are so matched to each other that the first energy storage means (C1) is charged during a transmission pause to above a minimum energy content.

3. A method according to claim 1 or claim 2 **characterised in that** before or upon the emission of the data the data are converted into transmission data, at least by each data bit to be transmitted being followed by a data bit that is inverted relative to that data bit.

4. A method according to one of claim 1 to 3 **characterised in that** the transmitting device (LED) is an infrared transmitting device, in particular an infrared diode.

5. A method according to claim 4 **characterised in that** the minimum time spacing between two electric pulses and the charging and discharging time constants of the first and second energy storage means (C1, C2) are adapted to each other in such a way that at least the amount of energy taken from the first energy storage means (C1) during a pulse is transferred during a pulse space substantially from the second energy storage means (C2) to the first energy storage means (C1).

6. A method according to claim 5 **characterised in that** the time duration of a transmission pause, that is to say the time spacing between the data to be transmitted, and the charging time constant of the second energy storage means (C2) are so matched to each other that the energy storage means (C2) is charged again during a transmission pause to above a minimum energy content.

7. A method according to one of claims 4 to 6 **characterised in that** a succession of pulse spaces, in particular a zero byte, is attached to the end of transmission data to achieve a transmission pause between data to be transmitted.

8. A method according to one of claims 4 to 7 **characterised in that** the data to be transmitted are converted into transmission data by means of a microprocessor, in particular a UART, and the transmission data are transmitted serially as a sequence of pulses and pulse spaces to an actuable switching means (T), by means of which a flow of current is switched through the transmitting device (LED in dependence on the sequence.

9. A data transmission apparatus for the remote control and/or remote enquiry of an electric device, in particular a pump, comprising a transmitting device (LED), wherein least two energy storage means (C1, C2) are provided for the supply of electric energy to the transmitting device (LED), wherein the transmitting device (LED) can be actuated by a sequence of pulses and pulse spaces, that represents the data to be transmitted, **characterised in that** the transmitting device (LED) takes its energy upon actuation by an electric pulse substantially from a first energy storage means (C1), the first energy storage means (C1) can be recharged during the pulse spaces within the sequence substantially by energy stored in a second energy storage means (C2), and both energy storage means (C1, C2) can be recharged by an energy supply (EV) in transmission pauses between data to be transmitted.

10. Apparatus according to claim 9 **characterised in that** it is in the form of a module (10) which can be connected to a portable computer (15), in particular a PDA, by way of a standardised interface, in particular an SD card interface, wherein the energy supply (EV) is associated with the portable computer (15) so that the energy storage means (C1, C2) of the module can be charged by way of the interface.

11. Apparatus according to claim 10 **characterised in that** the portable computer (15) is adapted to convert data to be transmitted into transmission data and to transmit the transmission data as a sequence of pulses and pulse spaces by way of the interface.

12. Apparatus according to claim 10 or claim 11 **characterised in that** the portable computer (15) is adapted by software to perform at least one of the following functions:
- detecting, storing and statistically evaluating operating data of pumps (11),
- querying and/or remotely adjusting operating parameters of pumps (11), and
- controlling a connection structure to a pump (11) selectable by a user of the apparatus and controlling a bidirectional data transmission protocol; between the apparatus and the selected pump (11).

13. Apparatus according to one of claims 9 to 12 **characterised in that** the transmitting device (LED) is an infrared transmitting device (LED), in particular an infrared diode, connected in series with a switching means (T) associated with the infrared transmitting means LED), which switches the flow of current through the infrared transmitting device (LED in dependence on the sequence of pulses and pulse spaces representing the data to be transmitted.

14. Apparatus according to claim 13 **characterised in that** the two energy storage means (C1, C2) are connected in parallel with the series connection of infrared transmitting device (LED) and switching means (T).

15. Apparatus according to claim 14 **characterised in that** the two energy storage means (C1, C2) are connected in parallel with each other.

16. Apparatus according to claim 15 **characterised in that** the parallel circuit of the two energy storage means (C1, C2) is in series with the energy supply (EV) and the charging time constant which is longer in time of the two energy storage means (C1, C2) is so selected that in a transmission pause between transmission data the two energy storage means (C1, C2) can be recharged by the energy supply (EV) to above a minimum energy content.

17. Apparatus according to one of claims 9 to 12 **characterised in that** the transmitting device is a radio or an ultrasound transmitting device.

18. Apparatus according to one of claim 9 to 17 **characterised in that** the data transmission apparatus is in the form of a module (10) which can be connected to a portable computer (15), in particular a PDA, by way of a standardised interface, in particular an SD card interface.

19. Use of a data transmission apparatus according to one of claims 9 to 18 for the remote control and/or remote enquiry of a pump (11).

## Revendications

1. Procédé pour la transmission de données à l'aide d'un dispositif d'émission (LED) pour la commande à distance et/ou l'interrogation à distance d'un appareil électrique, en particulier d'une pompe, dans lequel, pour alimenter le dispositif d'émission en énergie électrique, au moins deux accumulateurs d'énergie (C1, C2) sont prévus, le dispositif d'émission (LED) étant excité par une séquence, représentant les données à émettre, d'impulsions électriques et d'intervalles entre impulsions, **caractérisé en ce que** le dispositif d'émission (LED) est, lors de l'excitation par une impulsion électrique, alimenté en énergie électrique essentiellement à partir d'un premier accumulateur d'énergie (C1), le premier accumulateur d'énergie (C1) est chargé, pendant les intervalles entre impulsions à l'intérieur de la séquence, essentiellement à partir d'un deuxième accumulateur d'énergie (C2), et les deux accumulateurs d'énergie (C1, C2) sont chargés lors des intervalles entre les émissions des données à émettre, par une alimentation en énergie (EV).

2. Procédé selon la revendication 1, **caractérisé en ce que** la durée temporelle d'un intervalle entre émissions, c'est-à-dire la distance temporelle entre les données à émettre, et la constante de temps de charge du premier accumulateur d'énergie (C1) sont adaptées l'une à l'autre de telle sorte que le premier accumulateur d'énergie (C1) soit chargé pendant un intervalle entre émissions jusqu'à une teneur en énergie supérieure à une teneur minimale en énergie.

3. Procédé selon la revendication 1 ou 2, **caractérisé en ce que**, avant ou lors de l'émission des données, les données sont converties en des données d'émission, au moins par le fait que chaque type de données à émettre est suivi d'un bit de données inversé par rapport à ce bit de données.

4. Procédé selon l'une des revendications 1 à 3, **caractérisé en ce que** le dispositif d'émission (LED) est un dispositif d'émission infrarouge, en particulier une diode infrarouge.

5. Procédé selon la revendication 4, **caractérisé en ce que** la distance temporelle minimale entre deux impulsions électriques, et les constantes de temps de charge et de décharge du premier et du deuxième accumulateurs d'énergie (C1, C2), sont adaptées l'une à l'autre de telle sorte qu'au moins la quantité d'énergie prélevée du premier accumulateur d'énergie (C1) pendant une impulsion soit, pendant un intervalle entre impulsions, transférée pour l'essentiel du deuxième accumulateur d'énergie (C2) au premier accumulateur d'énergie (C1).

6. Procédé selon la revendication 5, **caractérisé en ce que** la durée temporelle d'un intervalle entre émissions, c'est-à-dire la distance temporelle entre les données à émettre, et la constante de temps de charge du deuxième accumulateur d'énergie (C2), sont adaptées l'une à l'autre de telle sorte que l'accumulateur d'énergie (C2) soit rechargé pendant un intervalle entre émissions jusqu'à une teneur en énergie supérieure à une teneur minimale en énergie.

7. Procédé selon l'une des revendications 4 à 6, **caractérisé en ce que**, pour réaliser un intervalle entre émissions, entre les données à émettre, une séquence d'intervalles entre impulsions, en particulier un octet zéro, est joint à l'extrémité des données d'émission.

8. Procédé selon l'une des revendications 4 à 7, **caractérisé en ce que** les données à émettre sont, à l'aide d'un microprocesseur, en particulier un UART, converties en des données d'émission, et les données d'émission sont transférées, sous forme d'une séquence d'impulsions électriques et d'intervalles entre impulsions, à un moyen de commutation excitable (T), à l'aide duquel un flux de courant est commuté par le dispositif d'émission (LED) en fonction de la séquence.

9. Dispositif de transmission de données pour la commande à distance et/ou l'interrogation à distance d'un appareil électrique, en particulier d'une pompe, comportant un dispositif d'émission (LED), dans lequel, pour alimenter le dispositif d'émission (LED) en énergie électrique, au moins deux accumulateurs d'énergie (C1, C2) sont prévus, le dispositif d'émission (LED) pouvant être excité par une séquence représentant les données à émettre d'impulsions électriques et d'intervalles entre impulsions, **caractérisé en ce que** le dispositif d'émission (LED), lors de l'excitation par une impulsion électrique, se procure son énergie essentiellement à partir d'un premier accumulateur d'énergie (C1), le premier accumulateur d'énergie (C1) peut être rechargé pendant les intervalles entre impulsions à l'intérieur de la séquence, essentiellement grâce à l'énergie accumulée dans un deuxième accumulateur d'énergie (C2), et les deux accumulateurs d'énergie (C1, C2) peuvent être rechargés lors des intervalles entre émissions, entre les données à émettre, grâce à une alimentation en énergie (EV).

10. Dispositif selon la revendication 9, **caractérisé en ce qu'**il est configuré comme un module (10) pouvant être relié à un ordinateur portable (15), en particulier un PDA, par l'intermédiaire d'une interface normalisée, en particulier une interface carte mémoire flash, l'alimentation en énergie (EV) étant affectée à l'ordinateur portable (15) de telle sorte que les accumulateurs d'énergie (C1, C2) du module (10) puissent être chargés par l'intermédiaire de l'interface.

11. Dispositif selon la revendication 10, **caractérisé en ce que** l'ordinateur portable (15) est monté pour la conversion de données à émettre en données d'émission et pour la transmission des données d'émission sous forme d'une séquence d'impulsions et d'intervalles entre impulsions, par l'intermédiaire de l'interface.

12. Dispositif selon la revendication 10 ou 11, **caractérisé en ce que** l'ordinateur portable (15) est, à l'aide d'un logiciel, monté pour exécuter au moins l'une des fonctions suivantes :
- saisie, stockage et évaluation statistique de données de marche de pompes (11),
- interrogation et/ou réglage à distance de paramètres de marche de pompes (11),
- commande de l'établissement d'une liaison avec une pompe (11) pouvant être sélectionnée par un utilisateur du dispositif, et commande d'un protocole de transmission de données bidirectionnelle entre le dispositif et la pompe (11) sélectionnée.

13. Dispositif selon l'une des revendications 9 à 12, **caractérisé en ce que** le dispositif d'émission (LED) est un dispositif d'émission infrarouge (LED), en particulier une diode infrarouge, qui est montée en série avec un moyen de commutation (T) affecté au dispositif d'émission infrarouge (LED), moyen de commutation qui commute le flux de courant à travers le dispositif d'émission infrarouge (LED), en fonction de la séquence, représentant les données à émettre, d'impulsions électriques et d'intervalles entre impulsions.

14. Dispositif selon la revendication 13, **caractérisé en ce que** les deux accumulateurs d'énergie (C1, C2) sont montés en parallèle avec le montage série du dispositif d'émission infrarouge (LED) et du moyen de commutation (T).

15. Dispositif selon la revendication 14, **caractérisé en ce que** les deux accumulateurs d'énergie (C1, C2) sont montés en parallèle l'un de l'autre.

16. Dispositif selon la revendication 15, **caractérisé en ce que** le montage en parallèle des deux accumulateurs d'énergie (C1, C2) est en série avec l'alimentation en énergie (EV), et la constante de temps de charge, qui dure plus longtemps, des deux accumulateurs d'énergie (C1, C2) est sélectionnée de telle sorte que, au cours d'un intervalle entre émissions entre des données d'émission, les deux accumulateurs d'énergie (C1, C2) puissent être chargés par l'alimentation en énergie (EV) jusqu'à une teneur en énergie supérieure à une teneur minimale en énergie.

17. Dispositif selon l'une des revendications 9 à 12, **caractérisé en ce que** le dispositif d'émission est un dispositif de radio-émission ou à ultrasons.

18. Dispositif selon l'une des revendications 9 à 17, **caractérisé en ce que** le dispositif de transmission de données est configuré comme un module (10) pouvant être relié à un ordinateur portable (15), en particulier un PDA, par l'intermédiaire d'une interface normalisée, en particulier une interface carte mémoire flash.

19. Utilisation d'un dispositif de transmission de données selon l'une des revendications 9 à 18 pour la commande à distance et/ou l'interrogation à distance d'une pompe (11).
